# EUROPEAN PATENT APPLICATION

(11) **EP 0 845 882 A2**
(43) Date of publication of application: **03.06.1998**
(21) Application number: 97120864.0
(22) Date of filing: 27.11.1997
(51) Int. Cl.: H04B 10/207

(54) **A passive optical network transceiver circuit**

(30) Priority: 28.11.1996 JP 318333/96
(71) Applicant: NEC CORPORATION, Tokyo (JP)
(72) Inventor: Tamura, Takafumi, Minato-ku, Tokyo (JP); Nakase, Naoki, Minato-ku, Tokyo (JP)
(74) Representative: Pätzold, Herbert, Dr.-Ing.

(57) **Abstract**

To lightening the severe condition imposed to receiver circuit of a center terminal (2) of a PON, a PON transceiver circuit of the invention ,used for a subscriber terminal (1a to 1c) exchanging optical burst signals with the center terminal, comprises: a level comparator (19) for comparing a level of the optical burst signals received from the center terminal with a reference voltage (21); a level control circuit (20) for generating a level control signal according to length of an optical path between the subscriber terminal and the center terminal referring to output of the level comparator; and an optical transmission signal level defining circuit (17) for defining a power intensity level of the burst signals transmitted from the subscriber terminal controlled with the level control signal.

## Description

The present invention relates to a Passive Optical Network (here-after abbreviated as PON) transceiver circuit, and particularly to that used as the optical interface module for an Optical Network Unit (ONU) which is installed at a subscriber's terminal of a Passive Double Star (PDS) subscriber system, wherein a plurality of ONUs, which are connected through a PON with a Star Coupler to an Optical Subscriber Unit (OSU) provided in a center terminal, exchange optical burst signals bi-directionally with the OSU.

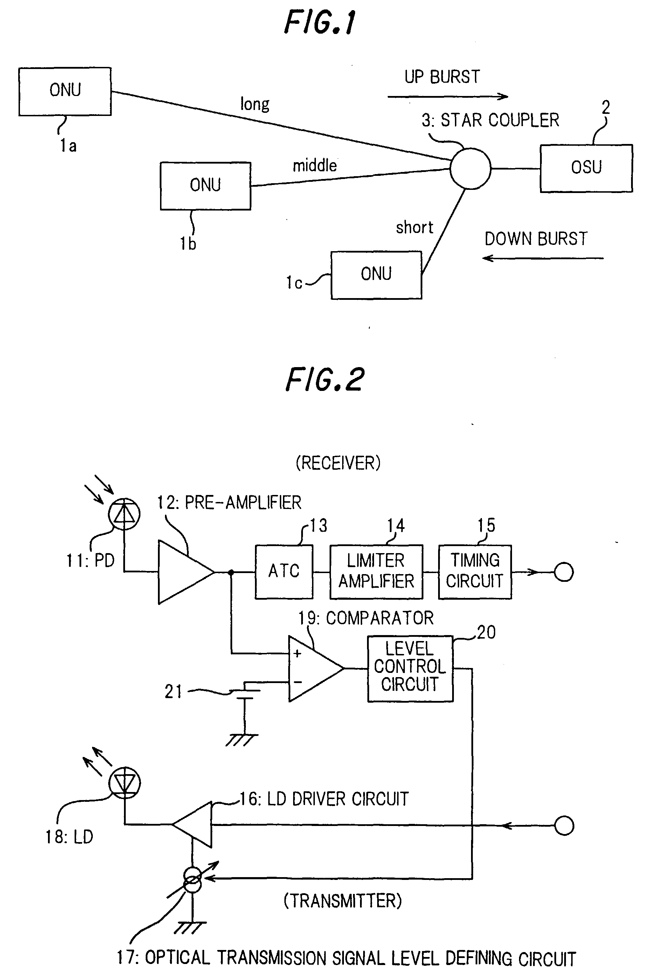

FIG. 1 is a schematic diagram illustrating an example of the PDS subscriber system having three ONUs 1a, 1b and 1c, each of which is connected to an OSU 2 radially with a single optical fiber by way of a star coupler 3. Generally there is length difference among optical paths between the OSU and ONUs. In the example of FIG. 1, the ONU 1a is the farthest, followed by the ONU 1b and the ONU 1c in the order. This length difference causes amplitude difference of the burst signals received by the OSU 2, imposing a wide dynamic range to the optical receiver circuit for the OSU 2.

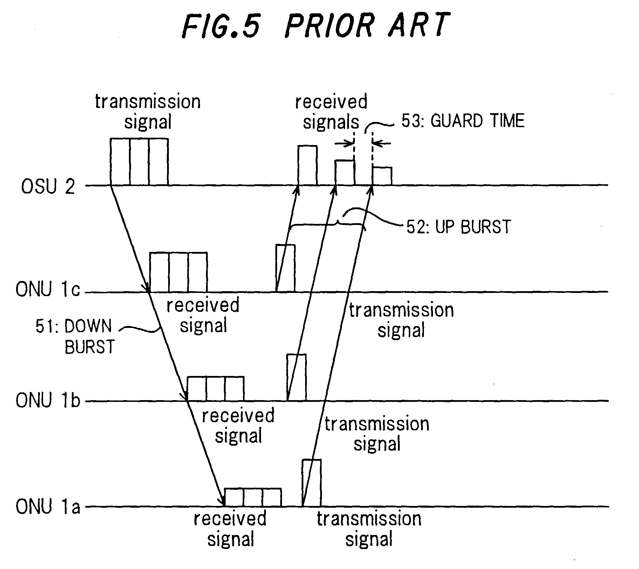

FIG. 5 is a timing chart illustrating exchange of the optical burst signals between the OSU 2 and the ONUs 1a, 1b and 1c. A down burst 51 from the OSU 2 is split to each ONU 1a to 1c, and so, receiver circuit of each ONU 1a to 1c always receives optical signals attenuated according to its distance from the OSU 2. To the contrary, the receiver circuit of the OSU 2 receives optical signals having various amplitudes when each ONU 1a to 1c transmits up bursts 52 of the same amplitude. Therefore, the receiver circuit of the OSU 2 is required to have a wide dynamic range and a high speed response to the weakest up burst from the farthest ONU 1a as well as to the strongest up burst from the nearest ONU 1c.

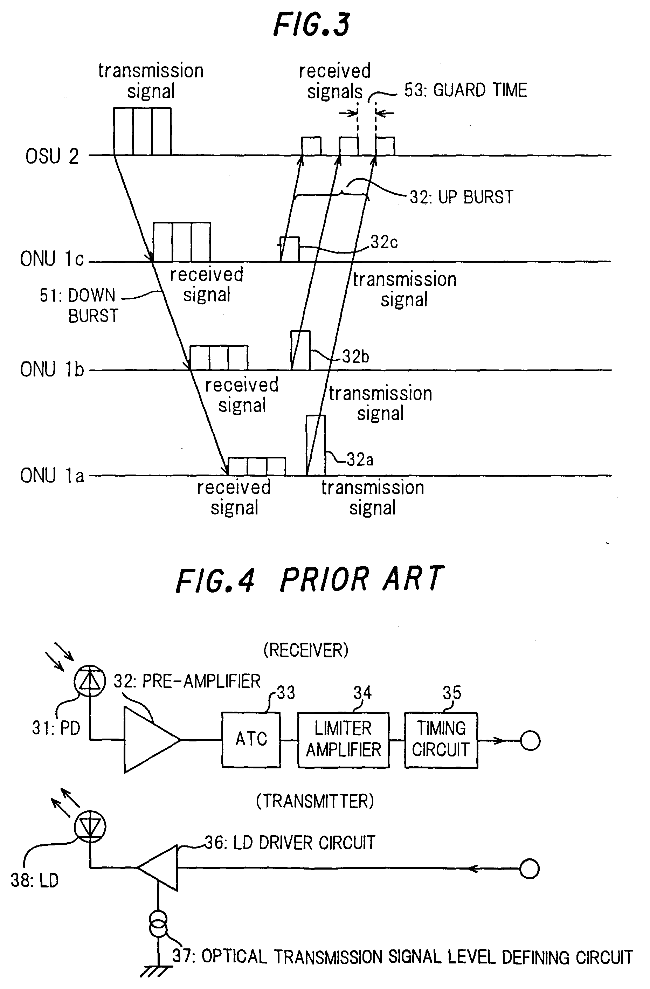

FIG. 4 is a block diagram illustrating a conventional PON transmitter receiver circuit.

Receiver circuit comprises a PD (Photo-Detector) 31 for converting received optical signals into electric signals; a pre-amplifier 32 for amplifying low level electric signals output of the PD 31, an ATC (Automatic Threshold Control circuit) 33 for obtaining high-sensitivity and stable response of the receiver irrespective of the received optical signal level, a limiter amplifier 34 for limiting maximum amplitude of the signal level and a timing circuit 35 for re-timing the received signal, while transmitter circuit comprises an LD (Laser Diode) 38 for generating an optical transmission signal according to an LD driver current, an LD driver circuit 36 for modulating the LD driver current driving the LD 38 according to a transmission signal, and an optical transmission signal level defining circuit 37 for supplying the driver current and defining the optical transmission signal level by maintaining intensity of the driver current to a prefixed level.

The optical transmission signal level of the transmitter of FIG. 4 can be set to a desired level by manually adjusting the prefixed level of the optical transmission signal level defining circuit 37. However, the ONUs of a PDS are generally shipped for subscribers with these parameters preset commonly according to the system specifications in view of installation cost, for example. Therefore, the optical receiver circuit of the OSU, receiving optical bursts of various power levels dispatched from ONUs of various distances as illustrated in FIG. 5, has been imposed to have an extremely quick response performance in order to discriminate and accord to the signal level difference in a short guard time 53 provided between consecutive two up bursts for separating them as well as a wide dynamic range. This makes designing of the OSU receiver circuit somewhat difficult and circuit size thereof certainly large.

Therefore, a primary object of the present invention is to provide a PON transceiver circuit of the ONU which can self-control its optical transmission signal level at an adequate level without any troublesome manual maintenance so as to lightening the severe condition imposed to receiver circuit of the OSU.

In order to achieve the object, a PON transceiver circuit of the invention used for a subscriber terminal exchanging optical burst signals with a center terminal of a PON comprises:
a level comparator for comparing a level of the optical burst signals received from the center terminal with a reference voltage;
a level control circuit for generating a level control signal according to length of an optical path between the subscriber terminal and the center terminal referring to output of the level comparator; and
an optical transmission signal level defining circuit for defining a power intensity level of the burst signals transmitted from the subscriber terminal controlled with the level control signal.

A variable range of the level control signal is preset according to system specifications of the PON.

Therefore, the receiver circuit of the OSU of the center terminal can follow the received signals reliably with comparatively narrow dynamic range and slow response performance, resulting in a simple, reliable and low cost configuration of the OSU.

The foregoing, further objects, features, and advantages of this invention will become apparent from a consideration of the following description, the appended claims, and the accompanying drawings wherein the same numerals indicate the same or the corresponding parts.

In the drawings:
FIG. 1 is a schematic diagram illustrating an example of a PDS subscriber system;
FIG. 2 is a block diagram illustrating a PON transceiver circuit according to an embodiment of the invention;
FIG. 3 is a timing chart illustrating exchange of the optical burst signals between the OSU 2 and the ONUs 1a, 1b and 1c of FIG. 1 wherein the PON transceiver circuit of FIG. 2 is applied;
FIG. 4 is a block diagram illustrating a conventional PON transmitter receiver circuit; and
FIG. 5 is a timing chart illustrating exchange of the optical burst signals between the OSU 2 and the ONUs 1a, 1b and 1c, wherein the conventional PON transmitter receiver circuit of FIG. 4 is applied.

Now, embodiments of the present invention will be described in connection with the drawings.

FIG. 2 is a block diagram illustrating a PON transceiver circuit according to an embodiment of the invention.

Referring to FIG. 2, the receiver part of the PON transceiver circuit comprises;
a PD 11 for converting received optical signals into electric signals, a pre-amplifier 12 for amplifying low level electric signals output of the PD 11, an ATC circuit 13 for refining wave form of received signal output of the pre-amplifier to obtain high-sensitivity and stable response of the receiver circuit irrespective of the received optical signal level, a limiter amplifier 14 for limiting maximum amplitude of the signal level output of the ATC 13, and a timing circuit 15 for re-timing pulse widths in the received signal processed by the limiter amplifier 14 to be delivered to a next stage (not depicted in the drawings), similarly to the conventional PON transmitter receiver circuit of FIG. 4, and further comprises;
a comparator 19 for comparing the received signal level output of the pre-amplifier 12 with a reference voltage 21, and
a level control circuit 20 for generating a level control signal to be used for controlling optical transmission signal level according to output of the comparator 19.

Transmitter part of the PON transceiver comprises a LD 18 for generating an optical transmission signal according to an LD driver current, an LD driver circuit 16 for modulating the LD driver current driving the LD 18 according to a transmission signal delivered from a preceding stage (not depicted in the drawings), and an optical transmission signal level defining circuit 17 for supplying the driver current and adjusting the optical transmission signal level by controlling intensity of the driver current according to the level control signal output of the level control circuit 20.

Now, operation of the PON transceiver circuit of FIG. 2 is described referring to a timing chart of FIG. 3 illustrating exchange of the optical burst signals between the OSU 2 and the ONUs 1a, 1b and 1c of FIG. 1 wherein the PON transceiver circuit of FIG. 2 is applied.

The down burst 51 is split to each of the ONUs 1a, 1b and 1c in the same way with FIG. 5. In each of the ONUs 1a, 1b and 1c, header signal level of the down burst 51 output of the pre-amplifier 12 is compared by the comparator 19 with the reference voltage 21, which is set at a standard receiving signal level, namely about the receiving signal level of the ONU 1b, for example. Therefore, output of the comparator 19 of the ONU 1b remain neutral, while outputs of the comparator 19 of the ONUs 1a and 1c being negative and positive, respectively.

The output of the comparator 19 is input to the level control circuit 20 and converted into the level control signal for controlling the optical transmission signal level defining circuit 17 to set intensity level of the driver current so that the LD 18 generates the optical transmission signal having intensity level in proportion to the distance of the concerning ONU to the OSU 2, that is, in inverse proportion to the received signal level. The level control circuit 20 of the ONUs 1a and 1c generate the level control signals each having an analog value for setting the intensity level of the optical transmission signal stronger and weaker than that of the ONU 1b, in the example. The analog value of the level control signal is maintained until next down burst from the OSU 2 is received.

In the embodiment of FIG. 2, the variable range of the level control signal is preset according to the system specifications of the PDS when the ONUs are shipped, for example, instead of the prefixed level, namely, the driver current intensity level itself of the conventional PON transmitter receiver circuit of FIG. 4.

The optical transmission signal level defining circuit 17 of the em-bodiment takes charge of supplying the driver current to the LD driver circuit 16 and controlling the intensity level of the driver current according to the level control signal delivered from the level control circuit 20. Power level of the optical transmission signal is determined according to the driver current intensity defined by the analog value of the level control signal which is such controlled as above described.

The LD driver circuit 16 amplitude-modulates the driver current according to the transmission signal, with which the LD 18 is driven.

Thus, each of the ONUs 1a to 1c can send each of up bursts 32a to 32c as illustrated in FIG. 3, power level thereof is self-controlled to be adequate for arriving to the OSU 2 as the received signals having approximately the same intensity level, without needing any special field works. Therefore, the receiver circuit of the OSU 2 can follow the received signals reliably with comparatively narrow dynamic range and slow response performance, enabling to design a simple, reliable and low cost configuration of the OSU.

## Claims

1. A passive optical network transceiver circuit used for a subscriber terminal (1a to 1c) exchanging optical burst signals with a center terminal (2) of a passive optical network, said passive optical network transceiver circuit comprising:
a level comparator (19) for comparing a level of the optical burst signals received from the center terminal with a reference voltage (21);
a level control circuit (20) for generating a level control signal according to length of an optical path between the subscriber terminal (1a to 1c) and the center terminal (2) referring to output of said level comparator (19); and
an optical transmission signal level defining circuit (17) for defining a power intensity level of the burst signals to be transmitted from the subscriber terminal (1a to 1c) controlled with said level control signal.

2. The passive optical network transceiver circuit recited in claim 1, wherein a variable range of said level control signal is determined according to system specifications of the passive optical network.

3. The passive optical network transceiver circuit recited in claim 2, wherein said variable range can be preset manually.
